# FASCICULE DE BREVET EUROPEEN

(11) **EP 2 937 235 B1**
(45) Date de publication et mention de la délivrance du brevet: **08.01.2020**
(21) Numéro de dépôt: 15161786.7
(22) Date de dépôt: 30.03.2015
(51) Int. Cl.: B60H 1/00, B60H 1/32

(54) **DISPOSITIF DE GESTION THERMIQUE DE VÉHICULE AUTOMOBILE**
WÄRMESTEUERUNGSVORRICHTUNG FÜR KRAFTFAHRZEUG
THERMAL MANAGEMENT DEVICE OF A MOTOR VEHICLE

(30) Priorité: 25.04.2014 FR 1453777
(43) Date de publication de la demande: 28.10.2015
(73) Titulaire: VALEO SYSTEMES THERMIQUES, 78320 Le Mesnil Saint-Denis (FR)
(72) Inventeur: Aoun, Bernard, 75014 PARIS (FR); Gour, Josselin, 75014 PARIS (FR)
(74) Mandataire: Metz, Gaëlle

(56) Documents cités:
- EP-A1- 1 813 887
- WO-A1-2013/124173
- DE-A1- 19 702 097
- DE-A1-102011 015 151
- FR-A1- 2 949 386
- FR-A1- 2 969 042

## Description

L'invention se rapporte au domaine des véhicules automobiles et plus particulièrement aux dispositifs de gestion thermique de véhicules électriques et à leur procédé de dégivrage lors d'un fonctionnement en mode pompe à chaleur.

Les véhicules électriques ne comportant plus de moteur thermique, la fonction de chauffage de l'habitacle du véhicule ne peut plus être réalisée par un radiateur thermique dans lequel circule le liquide de refroidissement du moteur thermique.

Une solution proposée est d'utiliser des dispositifs de chauffage électrique, tels que des radiateurs électriques, à la place du radiateur thermique. Cette solution présente l'inconvénient de consommer l'énergie électrique de la batterie du véhicule, réduisant ainsi l'autonomie kilométrique du véhicule.

Afin de réduire la consommation électrique de la batterie du véhicule et de fournir un chauffage à l'habitacle du véhicule, il a été proposé d'utiliser un dispositif de climatisation réversible pouvant fonctionner en mode pompe à chaleur, ce dispositif de climatisation étant généralement placé dans une installation de climatisation du véhicule. Le dispositif de climatisation comprend de manière connue un compresseur, un condenseur, un dispositif de détente et un évaporateur et permet classiquement de refroidir un flux d'air traversant une installation de climatisation du véhicule au moyen de l'évaporateur. Dans le cas présent, le dispositif de climatisation est utilisé de manière à fournir de la chaleur au flux d'air traversant l'installation de climatisation. Pour ce faire, le dispositif de climatisation est utilisé de sorte que l'évaporateur fonctionne comme un condenseur et réchauffe le flux d'air le traversant.

Cependant, l'utilisation de la boucle de climatisation en mode pompe à chaleur n'est pas complètement satisfaisante puisque les performances en mode pompe à chaleur dépendent des conditions climatiques extérieures.

Afin d'augmenter les performances en mode pompe à chaleur et notamment afin que ce mode soit efficace sur une grande plage de températures extérieures, il est connu d'utiliser un dispositif de pompe à chaleur bi-étagé, c'est-à-dire comportant deux circuits en cascade, chacun comportant un compresseur propre.

Néanmoins, un dispositif de gestion thermique capable à la fois de fonctionner en mode climatisation et de fonctionner en mode pompe à chaleur et dont le mode pompe à chaleur est assuré par un dispositif de pompe à chaleur bi-étagé, est complexe à concevoir et à installer et nécessite des composants complexes tels que des vannes quatre voies afin de passer d'un mode à un autre.

Par ailleurs, le document WO 2013/124173 A1 divulgue un dispositif de gestion thermique suivant toutes les caractéristiques du préambule de la revendication 1, permettant un refroidissement optimal de la batterie du véhicule.

Un des buts de l'invention est donc de remédier au moins partiellement aux inconvénients de l'art antérieur et de proposer un dispositif de gestion thermique simple et capable de fonctionner en configuration climatisation et en configuration pompe à chaleur bi-étagé.

La présente invention concerne donc un dispositif de gestion thermique comportant un premier circuit de circulation de fluide frigorigène et un second circuit de circulation de fluide caloporteur suivant les caractéristiques de la revendication 1.

De part sa conception et sa structure, le dispositif de gestion thermique selon l'invention permet un passage d'une configuration de fonctionnement à une autre de manière aisée, rapide et réactive. En effet l'utilisation d'une vanne trois voies et de deux circuits de circulation permet d'éviter les changements de sens de flux nécessaires pour passer d'une configuration de climatisation à une configuration pompe à chaleur. De plus, l'installation est plus simple du fait de l'absence de pièces telles qu'une vanne quatre voies qui nécessite des connexions et branchements complexes.

Selon un aspect de l'invention, le second circuit de circulation de fluide caloporteur comporte en outre une pompe placée en aval des premier et second échangeurs thermiques et en amont du condenseur.

Selon un autre aspect de l'invention, le premier circuit de circulation du dispositif de gestion thermique comporte :
- une vanne d'expansion placée en aval du condenseur,
- un réservoir de séparation placé en aval de la vanne d'expansion.

Selon un autre aspect de l'invention, le premier circuit de circulation du dispositif de gestion thermique comporte :
- un premier détendeur comportant une fonction d'arrêt, placé entre le réservoir de séparation et le premier évaporateur, et
- un second détendeur comportant une fonction d'arrêt, placé entre le réservoir de séparation et le second évaporateur.

Selon un autre aspect de l'invention, le dispositif de gestion thermique comporte, entre le réservoir de séparation et ledit au moins un compresseur, une dérivation de redirection du fluide frigorigène en phase gazeuse restant dans le réservoir de séparation, vers ledit au moins un compresseur.

Selon un autre aspect de l'invention, le dispositif de gestion thermique est configuré pour fonctionner en compression bi-étagée, le fluide frigorigène en phase gazeuse subissant une première compression à une pression intermédiaire au niveau du au moins un compresseur, cédant de l'énergie calorifique au niveau du condenseur, subissant une détente au niveau de la vanne d'expansion, le fluide frigorigène encore en phase gazeuse au sein du réservoir de séparation revenant vers le au moins un compresseur via la dérivation pour subir une seconde compression à une pression plus importante que la pression intermédiaire.

Selon un autre aspect de l'invention, ledit dispositif comporte un premier et un second compresseur placés en série et la dérivation est raccordée à une canalisation reliant la sortie du premier compresseur à l'entrée du second compresseur.

Selon un autre aspect de l'invention, la dérivation est raccordée à une seconde entrée de fluide frigorigène du compresseur.

Suivant l'invention, le premier évaporateur ainsi que le premier échangeur thermique sont placés en contact de l'air extérieur du véhicule automobile et le second évaporateur et le second échangeur thermique sont placés au sein d'un circuit d'alimentation en air de l'habitacle, ledit second échangeur thermique étant placé à la suite du second évaporateur dans le sens de circulation de l'air, dans ledit circuit d'alimentation, vers l'habitacle.

Selon un autre aspect de l'invention, le dispositif de gestion thermique comporte, dans le circuit d'alimentation en air de l'habitacle, un élément de chauffage additionnel placé à la suite du second échangeur thermique dans le sens de circulation de l'air, dans le circuit d'alimentation, vers l'habitacle.

Selon un autre aspect de l'invention, le dispositif de gestion thermique est configuré pour fonctionner dans une configuration climatisation dans laquelle :
- le premier détendeur est fermé,
- le second détendeur est ouvert, et
- la vanne trois voies redirige le fluide caloporteur vers le premier échangeur thermique.

Le fluide frigorigène du premier circuit de circulation capte l'énergie calorifique de l'air traversant le second évaporateur et de ce fait passe d'un état liquide à gazeux. Le fluide frigorigène est ensuite comprimé par l'au moins un compresseur et repasse à l'état liquide au niveau du condenseur, cédant l'énergie calorifique au fluide caloporteur du second circuit de circulation.

La vanne d'expansion et le détendeur permettent une diminution de la pression du fluide frigorigène et le réservoir de séparation permet une séparation entre le fluide frigorigène en phase liquide et le fluide frigorigène encore en phase gazeuse.

L'énergie calorifique récupérée par le fluide caloporteur dans le second circuit de circulation est ensuite dissipée au niveau du premier échangeur thermique.

Selon un autre aspect de l'invention, le dispositif de gestion thermique est en outre configuré pour fonctionner dans une configuration pompe à chaleur dans laquelle :
- le premier détendeur est ouvert,
- le second détendeur est fermé, et
- la vanne trois voies redirige le fluide caloporteur vers le second échangeur thermique.

Le fluide frigorigène du premier circuit de circulation capte l'énergie calorifique de l'air extérieur traversant le premier évaporateur et de ce fait passe d'un état liquide à gazeux. Le fluide frigorigène est ensuite comprimé par l'au moins un compresseur et repasse à l'état liquide au niveau du condenseur, cédant l'énergie calorifique au fluide caloporteur du second circuit de circulation.

La vanne d'expansion et le détendeur permettent une diminution de la pression du fluide frigorigène et le réservoir de séparation permet une séparation entre le fluide frigorigène en phase liquide et le fluide frigorigène encore en phase gazeuse.

L'énergie calorifique récupérée par le fluide caloporteur dans le second circuit de circulation est ensuite dissipée au niveau du second échangeur thermique afin de réchauffer l'air traversant le circuit d'alimentation en air de l'habitacle.

Selon un autre aspect de l'invention, le dispositif est en outre configuré pour qu'en configuration pompe à chaleur, l'élément de chauffage additionnel est en fonctionnement.

Selon un autre aspect de l'invention, le dispositif de gestion thermique est en outre configuré pour fonctionner dans une première configuration de désembuage dans laquelle :
- le premier détendeur est fermé,
- le second détendeur est ouvert, et
- la vanne trois voies redirige le fluide caloporteur vers le second échangeur thermique.

Le fluide frigorigène du premier circuit de circulation capte l'énergie calorifique de l'air traversant le second évaporateur et de ce fait passe d'un état liquide à gazeux. Le fluide frigorigène est ensuite comprimé par l'au moins un compresseur et repasse à l'état liquide au niveau du condenseur, cédant l'énergie calorifique au fluide caloporteur du second circuit de circulation.

La vanne d'expansion et le détendeur permettent une diminution de la pression du fluide frigorigène et le réservoir de séparation permet une séparation entre le fluide frigorigène en phase liquide et le fluide frigorigène encore en phase gazeuse.

L'énergie calorifique récupérée par le fluide caloporteur dans le second circuit de circulation est ensuite dissipée au niveau du second échangeur thermique afin de réchauffer et d'assécher l'air traversant le circuit d'alimentation en air de l'habitacle.

Selon un autre aspect de l'invention, le dispositif de gestion thermique est en outre configuré pour fonctionner dans une seconde configuration de désembuage dans laquelle :
- le premier détendeur est ouvert,
- le second détendeur est ouvert, et
- la vanne trois voies redirige le fluide caloporteur vers le second échangeur thermique.

Le fluide frigorigène du premier circuit de circulation capte l'énergie calorifique à la fois de l'air traversant le second évaporateur et de l'air extérieur traversant le premier évaporateur et de ce fait passe d'un état liquide à gazeux. Le fluide frigorigène est ensuite comprimé par l'au moins un compresseur et repasse à l'état liquide au niveau du condenseur, cédant l'énergie calorifique au fluide caloporteur du second circuit de circulation. Cette double captation d'énergie calorifique augmente l'efficacité du système à basse température.

La vanne d'expansion et les détendeurs permettent une diminution de la pression du fluide frigorigène et le réservoir de séparation permet une séparation entre le fluide frigorigène en phase liquide et le fluide frigorigène encore en phase gazeuse.

L'énergie calorifique récupérée par le fluide caloporteur dans le second circuit de circulation est ensuite dissipée au niveau du second échangeur thermique afin de réchauffer et d'assécher l'air traversant le circuit d'alimentation en air de l'habitacle.

Selon un autre aspect de l'invention, le dispositif est en outre configuré pour que dans la seconde configuration de désembuage, l'élément de chauffage additionnel est en fonctionnement.

De manière préférentielle, le second circuit de circulation de fluide caloporteur présenté ci-dessus est un circuit où il n'y a pas de changement d'état du fluide caloporteur.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique générale du dispositif de gestion thermique,
- la figure 2 montre une représentation schématique du dispositif de gestion thermique fonctionnant en configuration climatisation,
- la figure 3 montre une représentation schématique du dispositif de gestion thermique fonctionnant en configuration pompe à chaleur,
- la figure 4 montre une représentation schématique du dispositif de gestion thermique fonctionnant en configuration désembuage selon un premier mode de réalisation,
- la figure 5 montre une représentation schématique du dispositif de gestion thermique fonctionnant en configuration désembuage selon un second mode de réalisation,
- la figure 6a montre une représentation schématique du raccordement de la dérivation au compresseur selon un premier mode de réalisation,
- la figure 6b montre une représentation schématique du raccordement de la dérivation au compresseur selon un second mode de réalisation.

Sur les différentes figures, les éléments identiques portent les mêmes numéros de référence.

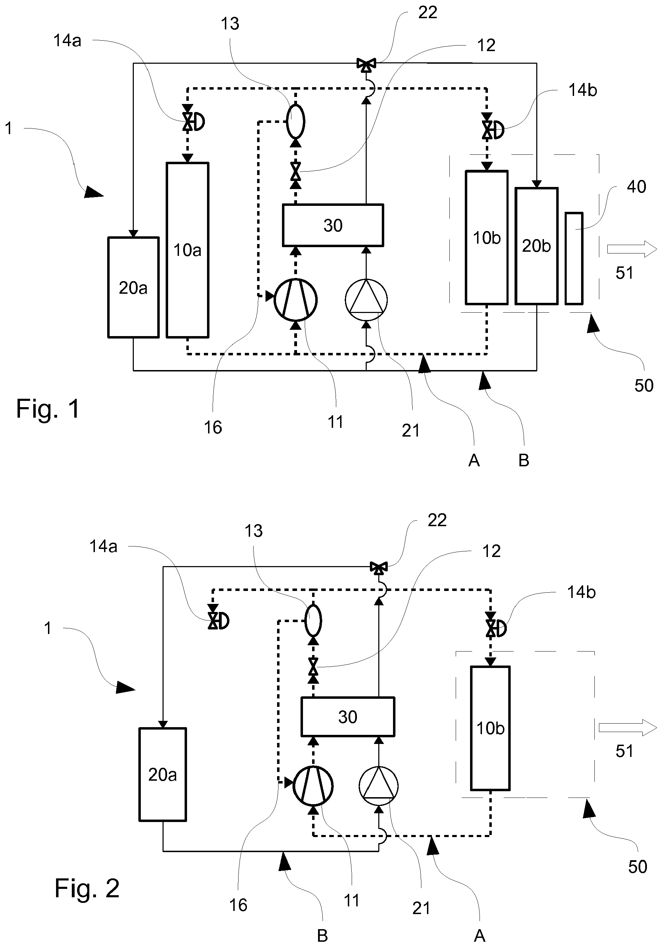

Comme le montre la figure 1, l'invention concerne un dispositif de gestion thermique comportant un premier circuit de circulation A de fluide frigorigène et un second circuit de circulation B de fluide caloporteur. Les premier A et second B circuits de circulation peuvent échanger de l'énergie calorifique l'un avec l'autre au niveau d'un condenseur 30 à double circulation, appartenant à la fois au premier A et au second B circuit de circulation, et dans lequel circulent le fluide frigorigène et le fluide caloporteur.

Le fluide frigorigène et le fluide caloporteur peuvent être des fluides différents, de même nature ou encore identiques, par exemple de l'eau glycolée.

Le premier circuit de circulation A de fluide frigorigène comporte :
- au moins un premier 10a et un second 10b évaporateur, chacun comportant une entrée et une sortie de fluide frigorigène. Le premier évaporateur 10a est généralement positionné au niveau de la face avant du véhicule automobile et le second évaporateur 10b est quant à lui positionné au sein d'un circuit 50 d'alimentation en air de l'habitacle ;
- au moins un compresseur 11 comportant une entrée et une sortie de fluide frigorigène et étant placé en aval des premier 10a et second 10b évaporateurs. Les sorties des premier 10a et un second 10b évaporateurs sont toutes deux reliées à l'entrée du au moins un compresseur 11 ;
- le condenseur 30 qui comporte une entrée et une sortie de fluide frigorigène et une entrée et une sortie de fluide caloporteur, le condenseur 30 étant placé en aval du compresseur 11 du circuit de circulation A. La sortie dudit au moins un compresseur 11 est reliée à l'entrée de fluide frigorigène du condenseur 30 ;
- une vanne d'expansion 12 placée en aval du condenseur 30, comportant une entrée et une sortie de fluide frigorigène et dont l'entrée est reliée à la sortie de fluide frigorigène du condenseur 30 ;
- un réservoir de séparation 13 placé en aval de la vanne d'expansion 12, comportant une entrée et une sortie de fluide frigorigène et dont l'entrée est reliée à la sortie de la vanne d'expansion 12 ;
- un premier détendeur 14a comportant une fonction d'arrêt ainsi qu'une entrée et une sortie de fluide frigorigène. Le premier détendeur 14a est placé entre le réservoir de séparation 13 et le premier évaporateur 10a et son entrée est reliée à la sortie du réservoir de séparation 13. La sortie du premier détendeur 14a est quant à elle reliée à l'entrée du premier évaporateur 10a ;
- un second détenteur 14b comportant une fonction d'arrêt ainsi qu'une entrée et une sortie de fluide frigorigène. Le second détendeur 14b est placé entre le réservoir de séparation 13 et le second évaporateur 10b et son entrée est reliée à la sortie du réservoir de séparation 13. La sortie du second détendeur 14b est quant à elle reliée à l'entrée du second évaporateur 10b.

Le premier circuit de circulation A peut également comporter une dérivation 16 reliant le réservoir de séparation 13 au compresseur 11. Cette dérivation 16 permet un retour du fluide frigorigène encore en phase gazeuse du réservoir de séparation 13 vers le compresseur 11 afin que ce dernier soit de nouveau comprimé et repasse dans le condenseur 30 afin de passer en phase liquide.

On parle ici de compression bi-étagé. Le fluide frigorigène à l'état gazeux, arrivant soit du premier 10a ou du second 10b évaporateur, subit une première compression au niveau du compresseur 11 et atteint une pression intermédiaire. Le fluide frigorigène cède alors de l'énergie calorifique au niveau du condenseur 30, il est ensuite détendu au niveau de la vanne d'expansion 12, et arrive ensuite au niveau de réservoir de séparation 13. Le fluide frigorigène encore en phase gazeuse revient alors vers le compresseur 11 via la dérivation 16 pour être de nouveau comprimé à une pression supérieure à la pression intermédiaire et passer ensuite une seconde fois dans le condenseur 30 pour y céder de nouveau de l'énergie calorifique.

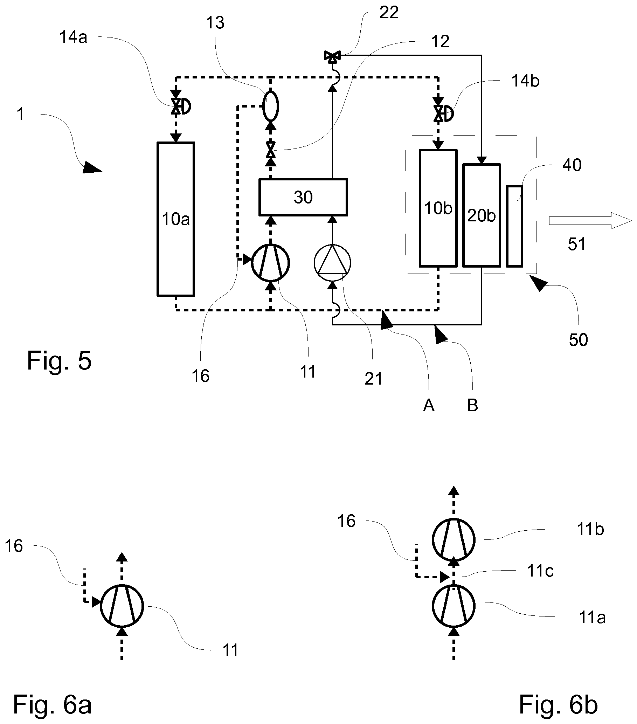

Selon un premier mode de réalisation illustré à la figure 6a, la dérivation 16 est raccordée à une seconde sortie de fluide frigorigène du réservoir de séparation 13 vers une seconde entrée de fluide frigorigène d'un compresseur 11, ce dernier étant de préférence un compresseur dit bi-étagé.

Selon un second mode de réalisation illustré à la figure 6b, le premier circuit de circulation comporte un premier 11a et un second 11b compresseur en série. La dérivation 16 part alors d'une seconde sortie de fluide frigorigène du réservoir de séparation 13 et est raccordée à une canalisation 11c placée entre la sortie du premier compresseur 11a et l'entrée du second compresseur 11b.

Toujours comme illustré sur la figure 1, le second circuit de circulation B de fluide caloporteur peut comporter quant à lui :
- au moins un premier 20a et un second 20b échangeur thermique, chacun comportant une entrée et une sortie de fluide caloporteur. Le premier échangeur thermique 20a est généralement positionné au niveau de la face avant du véhicule automobile et le second échangeur thermique 20b est quant à lui positionné au sein du circuit 50 d'alimentation en air de l'habitacle. Ledit second échangeur thermique 20b est de préférence placé à la suite du second évaporateur 10b dans le sens de circulation 51 de l'air vers l'habitacle ;
- une pompe 21 comportant une entrée et une sortie de fluide caloporteur et étant placée en aval des premier 20a et second 20b échangeurs thermiques. Les sorties des premier 20a et second 20b échangeur thermiques sont toutes deux reliées à l'entrée de la pompe 21 ;
- le condenseur 30 qui comporte une entrée et une sortie de fluide frigorigène et une entrée et une sortie de fluide caloporteur, le condenseur 30 étant placé en aval de la pompe 21 du circuit de circulation B. La sortie de la pompe 21 étant reliée à l'entrée de fluide caloporteur du condenseur 30 ;
- une vanne trois voies 22 placée entre le condenseur 30 et les premier 20a et second 20b échangeur thermiques. Ladite vanne trois voies 22 permettant la liaison entre les entrées des premier 20a et second 20b échangeurs thermiques avec la sortie de fluide caloporteur du condenseur 30.

Le second circuit de circulation B de fluide caloporteur présenté ci-dessus est un circuit où il n'y a pas de changement d'état du fluide caloporteur.

Afin de contribuer au chauffage de l'air arrivant dans l'habitacle, le circuit 50 d'alimentation en air de l'habitacle peut également comporter un élément de chauffage additionnel 40, par exemple un radiateur électrique, placé à la suite du second échangeur thermique 20b dans le sens de circulation 51 de l'air vers l'habitacle.

Le dispositif de gestion thermique 1 selon l'invention peut ainsi être configuré pour fonctionner selon différentes configurations illustrées aux figures 2 à 5. Dans ces différentes figures, seuls les éléments alimentés des premier A et second B circuits de circulations sont représentés.

### Configuration climatisation :

Une configuration de fonctionnement illustrée à la figure 2, est une configuration dite configuration climatisation afin de refroidir l'air traversant le circuit d'alimentation en air de l'habitacle 50.

Dans cette configuration de climatisation, le premier détendeur 14a est fermé, le second détendeur 14b est ouvert, et la vanne trois voies 22 redirige le fluide caloporteur vers le premier échangeur thermique 20a.

Le fluide frigorigène du premier circuit de circulation A capte l'énergie calorifique de l'air traversant le second évaporateur 10b et de ce fait passe d'un état liquide à gazeux. Le fluide frigorigène est ensuite comprimé par l'au moins un compresseur 11 et repasse à l'état liquide au niveau du condenseur 30 cédant l'énergie calorifique au fluide caloporteur du second circuit de circulation B.

La vanne d'expansion 12 et le détendeur 14b permettent une diminution de la pression du fluide frigorigène et le réservoir de séparation 13 permet une séparation entre le fluide frigorigène en phase liquide et le fluide frigorigène encore en phase gazeuse.

L'énergie calorifique récupérée par le fluide caloporteur dans le second circuit de circulation B est ensuite dissipée au niveau du premier échangeur thermique 20a.

### Configuration pompe à chaleur :

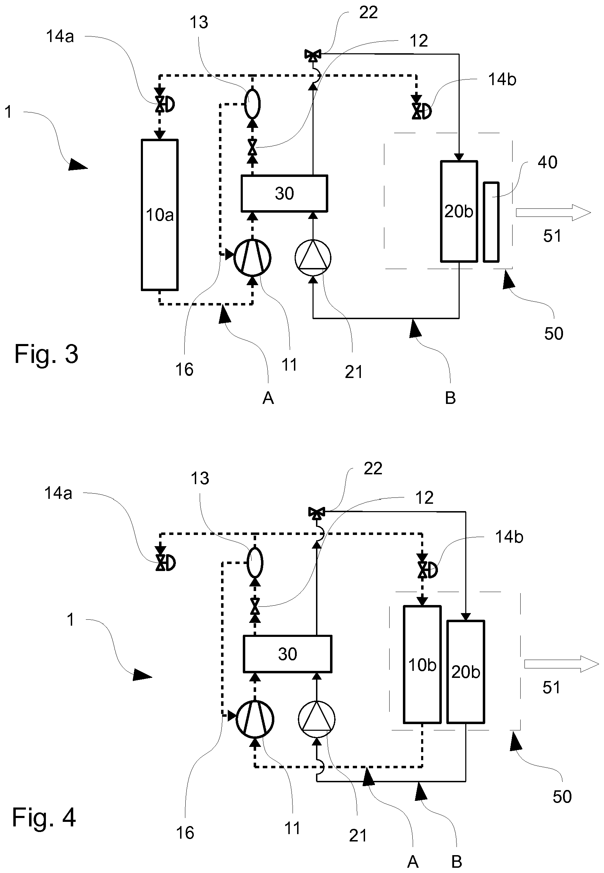

Une autre configuration de fonctionnement illustrée à la figure 3 est une configuration dite configuration pompe à chaleur afin de chauffer l'air traversant le circuit d'alimentation en air de l'habitacle 50.

Dans cette configuration pompe à chaleur, le premier détendeur 14a est ouvert, le second détendeur 14b est fermé, et la vanne trois voies 22 redirige le fluide caloporteur vers le second échangeur thermique 20b.

Le fluide frigorigène du premier circuit de circulation A capte l'énergie calorifique de l'air extérieur traversant le premier évaporateur 10a et de ce fait passe d'un état liquide à gazeux. Le fluide frigorigène est ensuite comprimé par l'au moins un compresseur 11 et repasse à l'état liquide au niveau du condenseur 30 cédant l'énergie calorifique au fluide caloporteur du second circuit de circulation B.

La vanne d'expansion 12 et le détendeur 14a permettent une diminution de la pression du fluide frigorigène et le réservoir de séparation 13 permet une séparation entre le fluide frigorigène en phase liquide et le fluide frigorigène encore en phase gazeuse.

L'énergie calorifique récupérée par le fluide caloporteur dans le second circuit de circulation B est ensuite dissipée au niveau du second échangeur thermique 20b afin de réchauffer l'air traversant le circuit 50 d'alimentation en air de l'habitacle.

Dans cette configuration de fonctionnement, l'élément de chauffage additionnel 40 peut éventuellement être en fonctionnement pour aider au chauffage.

### Première configuration de désembuage :

Une autre configuration de fonctionnement illustrée à la figure 4 est une première configuration de désembuage afin de chauffer et assécher l'air traversant le circuit 50 d'alimentation en air de l'habitacle. Cette première configuration de désembuage est particulièrement appropriée pour des températures extérieures comprises entre 0 et 20°C et plus particulièrement pour des températures supérieures à 10°C.

Dans cette première configuration de désembuage, le premier détendeur 14a est fermé, le second détendeur 14b est ouvert, et la vanne trois voies redirige 22 le fluide caloporteur vers le second échangeur thermique 20b.

Le fluide frigorigène du premier circuit de circulation A capte l'énergie calorifique de l'air traversant le second évaporateur 10b et de ce fait passe d'un état liquide à gazeux. Le fluide frigorigène est ensuite comprimé par l'au moins un compresseur 11 et repasse à l'état liquide au niveau du condenseur 30 cédant l'énergie calorifique au fluide caloporteur du second circuit de circulation B.

La vanne d'expansion 12 et le détendeur 14b permettent une diminution de la pression du fluide frigorigène et le réservoir de séparation 13 permet une séparation entre le fluide frigorigène en phase liquide et le fluide frigorigène encore en phase gazeuse.

L'énergie calorifique récupérée par le fluide caloporteur dans le second circuit de circulation B est ensuite dissipée au niveau du second échangeur thermique 20b afin de réchauffer et d'assécher l'air traversant le circuit 50 d'alimentation en air de l'habitacle.

### Seconde configuration de désembuage :

Une autre configuration de fonctionnement illustrée à la figure 5 est une seconde configuration de désembuage afin de chauffer et assécher l'air traversant le circuit 50 d'alimentation en air de l'habitacle. Cette seconde configuration de désembuage est particulièrement appropriée pour des températures extérieures comprises entre 0 et 20°C et plus particulièrement pour des températures inférieures à 10°C.

Dans cette seconde configuration de désembuage, les premier 14a et second 14b détendeurs 14a sont ouverts, et la vanne trois voies redirige 22 le fluide caloporteur vers le second échangeur thermique 20b.

Le fluide frigorigène du premier circuit de circulation A capte l'énergie calorifique à la fois de l'air traversant le second évaporateur 10b et de l'air extérieur traversant le premier évaporateur 10a et de ce fait passe d'un état liquide à gazeux. Le fluide frigorigène est ensuite comprimé par l'au moins un compresseur 11 et repasse à l'état liquide au niveau du condenseur 30 cédant l'énergie calorifique au fluide caloporteur du second circuit de circulation B. Cette double captation d'énergie calorifique augmente l'efficacité du système à basse température.

La vanne d'expansion 12 et les détendeurs 14a et 14b permettent une diminution de la pression du fluide frigorigène et le réservoir de séparation 13 permet une séparation entre le fluide frigorigène en phase liquide et le fluide frigorigène encore en phase gazeuse.

L'énergie calorifique récupérée par le fluide caloporteur dans le second circuit de circulation B est ensuite dissipée au niveau du second échangeur thermique 20b afin de réchauffer et d'assécher l'air traversant le circuit 50 d'alimentation en air de l'habitacle.

L'élément de chauffage additionnel 40 peut également être en fonctionnement pour aider au chauffage et à l'assèchement de l'air traversant le circuit 50 d'alimentation en air de l'habitacle.

Ainsi, le dispositif de gestion thermique 1 selon l'invention, de part sa conception et sa structure permet un passage d'une configuration de fonctionnement à une autre aisé, rapide et réactif. En effet l'utilisation d'une vanne trois voies 22 et de deux circuits de circulation permet d'éviter les changements de sens de flux nécessaires pour passer d'une configuration climatisation à une configuration pompe à chaleur. De plus, l'installation est plus simple du fait de l'absence de pièces telles qu'une vanne quatre voies qui nécessite des connexions et branchements complexes.

## Revendications

1. Dispositif de gestion thermique (1) comportant un premier circuit de circulation (A) de fluide frigorigène et un second circuit de circulation (B) de fluide caloporteur et un condenseur (30) à double circulation faisant partie du premier (A) et du second (B) circuit de circulation et dans lequel circule le fluide frigorigène ainsi que le fluide caloporteur,
le premier circuit de circulation (A) de fluide frigorigène comportant :
- au moins un premier (10a) et un second (10b) évaporateur,
- au moins un compresseur (11) placé en aval des premier (10a) et second (10b) évaporateurs et en amont du condenseur (30),
le second circuit de circulation (B) de fluide caloporteur comportant:
- au moins un premier (20a) et un second (20b) échangeur thermique,
une vanne trois voies (22) placée entre le condenseur (30) et les premier (20a) et second (20b) échangeurs thermiques, le second évaporateur (10b) et le second échangeur thermique (20b) étant placés au sein d'un circuit (50) d'alimentation en air de l'habitacle, ledit second échangeur thermique (20b) étant placé à la suite du second évaporateur (10b) dans le sens de circulation (51) de l'air, dans le circuit (50) d'alimentation, vers l'habitacle, **caractérisé en ce que** le premier évaporateur (10a) ainsi que le premier échangeur thermique (20a) sont placés en contact de l'air extérieur du véhicule automobile.

2. Dispositif de gestion thermique (1) selon la revendication précédente, **caractérisé en ce que** le second circuit de circulation (B) de fluide caloporteur comporte en outre une pompe (21) placée en aval des premier (20a) et second (20b) échangeurs thermiques et en amont du condenseur (30).

3. Dispositif de gestion thermique (1) selon l'une des revendications 1 ou 2, **caractérisé en ce que** le premier circuit de circulation (A) comporte :
- une vanne d'expansion (12) placée en aval du condenseur (30),
- un réservoir de séparation (13) placé en aval de la vanne d'expansion (12).

4. Dispositif de gestion thermique (1) selon la revendication 3, **caractérisé en ce que** le premier circuit de circulation (A) comporte :
- un premier détendeur (14a) comportant une fonction d'arrêt, placé entre le réservoir de séparation (13) et le premier évaporateur (10a), et
- un second détendeur (14b) comportant une fonction d'arrêt, placé entre le réservoir de séparation (13) et le second évaporateur (10b).

5. Dispositif de gestion thermique (1) selon l'une des revendications 3 ou 4, **caractérisé en ce qu'**il comporte, entre le réservoir de séparation (13) et ledit au moins un compresseur (11), une dérivation (16) de redirection du fluide frigorigène en phase gazeuse restant dans le réservoir de séparation (13), vers ledit au moins un compresseur (11).

6. Dispositif de gestion thermique (1) selon la revendication précédente, **caractérisé en ce que** ledit dispositif de gestion thermique (1) est configuré pour fonctionner en compression bi-étagée, le fluide frigorigène en phase gazeuse subissant une première compression à une pression intermédiaire au niveau du au moins un compresseur (11), cédant de l'énergie calorifique au niveau du condenseur (30), subissant une détente au niveau de la vanne d'expansion (12), le fluide frigorigène encore en phase gazeuse au sein du réservoir de séparation (13) revenant vers le au moins un compresseur (11) via la dérivation (16) pour subir une seconde compression à une pression plus importante que la pression intermédiaire.

7. Dispositif de gestion thermique (1) selon l'une des revendications 5 ou 6, **caractérisé en ce que** ledit dispositif comporte un premier (11a) et un second (11b) compresseur placés en série et la dérivation (16) est raccordée à une canalisation (11c) reliant la sortie du premier compresseur (11a) à l'entrée du second compresseur (11b).

8. Dispositif de gestion thermique (1) selon l'une des revendications 5 ou 6, **caractérisé en ce que** la dérivation (16) est raccordée à une seconde entrée de fluide frigorigène du compresseur (11).

9. Dispositif de gestion thermique (1) selon l'une des revendications précédentes, **caractérisé en ce qu'**il comporte, dans le circuit (50) d'alimentation en air de l'habitacle, un élément de chauffage additionnel (40) placé à la suite du second échangeur thermique (20b) dans le sens de circulation (51) de l'air, dans le circuit (50) d'alimentation, vers l'habitacle.

10. Dispositif de gestion thermique (1) selon l'une des revendications 4 à 9, **caractérisé en ce qu'**il est configuré pour fonctionner dans une configuration climatisation dans laquelle :
- le premier détendeur (14a) est fermé,
- le second détendeur (14b) est ouvert, et
- la vanne trois voies (22) redirige le fluide caloporteur vers le premier échangeur thermique (20a).

11. Dispositif de gestion thermique (1) selon l'une des revendications 4 à 10, **caractérisé en ce qu'**il est en outre configuré pour fonctionner dans une configuration pompe à chaleur dans laquelle :
- le premier détendeur (14a) est ouvert,
- le second détendeur (14b) est fermé, et
- la vanne trois voies (22) redirige le fluide caloporteur vers le second échangeur thermique (20b).

12. Dispositif de gestion thermique (1) selon les revendications 9 et 11 en combinaison, **caractérisé en ce qu'**il est en outre configuré pour qu'en configuration pompe à chaleur, l'élément de chauffage additionnel (40) soit en fonctionnement.

13. Dispositif de gestion thermique (1) selon l'une des revendications 4 à 12, **caractérisé en ce qu'**il est en outre configuré pour fonctionner dans une premier configuration de désembuage dans laquelle :
- le premier détendeur (14a) est fermé,
- le second détendeur (14b) est ouvert, et
- la vanne trois voies redirige (22) le fluide caloporteur vers le second échangeur thermique (20b).

14. Dispositif de gestion thermique (1) selon l'une des revendications 4 à 13, **caractérisé en ce qu'**il est en outre configuré pour fonctionner dans une second configuration de désembuage dans laquelle :
- le premier détendeur (14a) est ouvert,
- le second détendeur (14b) est ouvert, et
- la vanne trois voies (22) redirige le fluide caloporteur vers le second échangeur thermique (20b).

15. Dispositif de gestion thermique (1) selon les revendications 9 et 14 en combinaison, **caractérisé en ce qu'**il est en outre configuré pour que dans la seconde configuration de désembuage, l'élément de chauffage additionnel (40) soit en fonctionnement.

## Patentansprüche

1. Wärmemanagementvorrichtung (1), welche einen ersten Kältemittel-Umlaufkreis (A) und einen zweiten Wärmeträgerfluid-Umlaufkreis (B) sowie einen Kondensator (30) mit Doppelumlauf, der Bestandteil des ersten (A) und des zweiten (B) Umlaufkreises ist und in welchem das Kältemittel sowie das Wärmeträgerfluid zirkulieren, aufweist,
wobei der erste Kältemittel-Umlaufkreis (A) aufweist:
- wenigstens einen ersten (10a) und einen zweiten (10b) Verdampfer,
- wenigstens einen Kompressor (11), der stromabwärts des ersten (10a) und des zweiten (10b) Verdampfers und stromaufwärts des Kondensators (30) angeordnet ist,
wobei der zweite Wärmeträgerfluid-Umlaufkreis (B) aufweist:
- wenigstens einen ersten (20a) und einen zweiten (20b) Wärmetauscher,
- ein Dreiwegeventil (22), das zwischen dem Kondensator (30) und dem ersten (20a) und zweiten (20b) Wärmetauscher angeordnet ist,
wobei der zweite Verdampfer (10b) und der zweite Wärmetauscher (20b) innerhalb eines Luftversorgungskreises (50) des Fahrzeuginnenraumes angeordnet sind, wobei der zweite Wärmetauscher (20b) in der Strömungsrichtung (51) der Luft in dem Versorgungskreis (50) zum Fahrzeuginnenraum hin nach dem zweiten Verdampfer (10b) angeordnet ist,
**dadurch gekennzeichnet, dass** der erste Verdampfer (10a) sowie der erste Wärmetauscher (20a) in Kontakt mit der Außenluft des Kraftfahrzeugs angeordnet sind.

2. Wärmemanagementvorrichtung (1) nach dem vorhergehenden Anspruch, **dadurch gekennzeichnet, dass** der zweite Wärmeträgerfluid-Umlaufkreis (B) außerdem eine Pumpe (21) aufweist, die stromabwärts des ersten (20a) und zweiten (20b) Wärmetauschers und stromaufwärts des Kondensators (30) angeordnet ist.

3. Wärmemanagementvorrichtung (1) nach einem der Ansprüche 1 oder 2, **dadurch gekennzeichnet, dass** der erste Umlaufkreis (A) aufweist:
- ein Expansionsventil (12), das stromabwärts des Kondensators (30) angeordnet ist,
- einen Trennungsbehälter (13), der stromabwärts des Expansionsventils (12) angeordnet ist.

4. Wärmemanagementvorrichtung (1) nach Anspruch 3, **dadurch gekennzeichnet, dass** der erste Umlaufkreis (A) aufweist:
- einen ersten Druckminderer (14a), der eine Absperrfunktion aufweist und zwischen dem Trennungsbehälter (13) und dem ersten Verdampfer (10a) angeordnet ist, und
- einen zweiten Druckminderer (14b), der eine Absperrfunktion aufweist und zwischen dem Trennungsbehälter (13) und dem zweiten Verdampfer (10b) angeordnet ist

5. Wärmemanagementvorrichtung (1) nach einem der Ansprüche 3 oder 4, **dadurch gekennzeichnet, dass** sie zwischen dem Trennungsbehälter (13) und dem wenigstens einen Kompressor (11) eine Zweigleitung (16) zur Umleitung des im Trennungsbehälter (13) verbliebenen Kältemittels in gasförmiger Phase zu dem wenigstens einen Kompressor (11) aufweist.

6. Wärmemanagementvorrichtung (1) nach dem vorhergehenden Anspruch, **dadurch gekennzeichnet, dass** die Wärmemanagementvorrichtung (1) dafür ausgelegt ist, mit zweistufiger Verdichtung zu arbeiten, wobei das Kältemittel in gasförmiger Phase an dem wenigstens einen Kompressor (11) eine erste Verdichtung auf einen Zwischendruck erfährt, am Kondensator (30) Wärmeenergie abgibt und am Expansionsventil (12) eine Entspannung erfährt, wobei das innerhalb des Trennungsbehälters (13) noch in gasförmiger Phase vorliegende Kältemittel über die Zweigleitung (16) zu dem wenigstens einen Kompressor (11) zurückströmt, um eine zweite Verdichtung auf einen Druck zu erfahren, der höher als der Zwischendruck ist.

7. Wärmemanagementvorrichtung (1) nach einem der Ansprüche 5 oder 6, **dadurch gekennzeichnet, dass** die Vorrichtung einen ersten (11a) und einen zweiten (11b) Kompressor aufweist, die in Reihe angeordnet sind, und die Zweigleitung (16) an ein Rohr (11c) angeschlossen ist, das den Ausgang des ersten Kompressors (11a) mit dem Eingang des zweiten Kompressors (11b) verbindet.

8. Wärmemanagementvorrichtung (1) nach einem der Ansprüche 5 oder 6, **dadurch gekennzeichnet, dass** die Zweigleitung (16) an einen zweiten Kältemitteleingang des Kompressors (11) angeschlossen ist.

9. Wärmemanagementvorrichtung (1) nach einem der vorhergehenden Ansprüche, **dadurch gekennzeichnet, dass** sie im Luftversorgungskreis (50) des Fahrzeuginnenraumes ein zusätzliches Heizelement (40) aufweist, das in der Strömungsrichtung (51) der Luft in dem Versorgungskreis (50) zum Fahrzeuginnenraum hin nach dem zweiten Wärmetauscher (20b) angeordnet ist.

10. Wärmemanagementvorrichtung (1) nach einem der Ansprüche 4 bis 9, **dadurch gekennzeichnet, dass** sie dafür ausgelegt ist, in einer Konfiguration "Klimatisierung" zu arbeiten, in welcher:
- der erste Druckminderer (14a) geschlossen ist,
- der zweite Druckminderer (14b) geöffnet ist, und
- das Dreiwegeventil (22) das Wärmeträgerfluid zum ersten Wärmetauscher (20a) umleitet.

11. Wärmemanagementvorrichtung (1) nach einem der Ansprüche 4 bis 10, **dadurch gekennzeichnet, dass** sie außerdem dafür ausgelegt ist, in einer Konfiguration "Wärmepumpe" zu arbeiten, in welcher:
- der erste Druckminderer (14a) geöffnet ist,
- der zweite Druckminderer (14b) geschlossen ist, und
- das Dreiwegeventil (22) das Wärmeträgerfluid zum zweiten Wärmetauscher (20b) umleitet.

12. Wärmemanagementvorrichtung (1) nach den Ansprüchen 9 und 11 in Kombination, **dadurch gekennzeichnet, dass** sie außerdem so ausgelegt ist, dass, damit sie in der Konfiguration "Wärmepumpe" arbeitet, das zusätzliche Heizelement (40) in Betrieb sein muss.

13. Wärmemanagementvorrichtung (1) nach einem der Ansprüche 4 bis 12, **dadurch gekennzeichnet, dass** sie außerdem dafür ausgelegt ist, in einer ersten Beschlagentfernungs-Konfiguration zu arbeiten, in welcher:
- der erste Druckminderer (14a) geschlossen ist,
- der zweite Druckminderer (14b) geöffnet ist, und
- das Dreiwegeventil (22) das Wärmeträgerfluid zum zweiten Wärmetauscher (20b) umleitet.

14. Wärmemanagementvorrichtung (1) nach einem der Ansprüche 4 bis 13, **dadurch gekennzeichnet, dass** sie außerdem dafür ausgelegt ist, in einer zweiten Beschlagentfernungs-Konfiguration zu arbeiten, in welcher:
- der erste Druckminderer (14a) geöffnet ist,
- der zweite Druckminderer (14b) geöffnet ist, und
- das Dreiwegeventil (22) das Wärmeträgerfluid zum zweiten Wärmetauscher (20b) umleitet.

15. Wärmemanagementvorrichtung (1) nach den Ansprüchen 9 und 14 in Kombination, **dadurch gekennzeichnet, dass** sie außerdem so ausgelegt ist, dass, damit sie in der zweiten Beschlagentfernungs-Konfiguration arbeitet, das zusätzliche Heizelement (40) in Betrieb sein muss.

## Claims

1. Thermal management device (1) comprising a first circuit (A) for coolant fluid circulation and a second circuit (B) for heat transfer fluid circulation and a double-circulation condenser (30) forming part of the first (A) and of the second (B) circulation circuit and in which the coolant fluid and also the heat transfer fluid circulate,
the first circuit (A) for coolant fluid circulation comprising:
- at least a first (10a) and a second (10b) evaporator,
- at least one compressor (11) placed downstream of the first (10a) and second (10b) evaporators and upstream of the condenser (30),
the second circuit (B) for heat transfer fluid circulation comprising:
- at least a first (20a) and a second (20b) heat exchanger,
a three-way valve (22) placed between the condenser (30) and the first (20a) and second (20b) heat exchangers,
the second evaporator (10b) and the second heat exchanger (20b) being placed within a circuit (50) for supplying air to the car interior, said second heat exchanger (20b) being placed following the second evaporator (10b) in the direction (51) of circulation of air, in the supply circuit (50), towards the car interior,
**characterized in that** the first evaporator (10a) and also the first heat exchanger (20a) are placed in contact with the air outside the motor vehicle.

2. Thermal management device (1) according to the preceding claim, **characterized in that** the second circuit (B) for heat transfer fluid circulation further comprises a pump (21) placed downstream of the first (20a) and second (20b) heat exchangers and upstream of the condenser (30).

3. Thermal management device (1) according to one of Claims 1 or 2, **characterized in that** the first circulation circuit (A) comprises:
- an expansion valve (12) placed downstream of the condenser (30),
- a separation reservoir (13) placed downstream of the expansion valve (12).

4. Thermal management device (1) according to Claim 3, **characterized in that** the first circulation circuit (A) comprises:
- a first pressure reducer (14a) comprising a stop function, placed between the separation reservoir (13) and the first evaporator (10a), and
- a second pressure reducer (14b) comprising a stop function, placed between the separation reservoir (13) and the second evaporator (10b).

5. Thermal management device (1) according to one of Claims 3 or 4, **characterized in that** it comprises, between the separation reservoir (13) and said at least one compressor (11), a bypass (16) for redirecting the coolant fluid in gaseous phase remaining in the separation reservoir (13) towards said at least one compressor (11).

6. Thermal management device (1) according to the preceding claim, **characterized in that** said thermal management device (1) is configured such as to function in two-stage compression, the coolant fluid in gaseous phase undergoing a first compression at an intermediate pressure at the at least one compressor (11), yielding calorific energy at the condenser (30), undergoing a pressure reduction at the expansion valve (12), the coolant fluid still in gaseous phase within the separation reservoir (13) returning to the at least one compressor (11) via the bypass (16) such as to undergo a second compression at a pressure higher than the intermediate pressure.

7. Thermal management device (1) according to one of Claims 5 or 6, **characterized in that** said device comprises a first (11a) and a second (11b) compressor placed in series and the bypass (16) is connected to a pipe (11c) connecting the outlet from the first compressor (11a) to the inlet of the second compressor (11b) .

8. Thermal management device (1) according to one of Claims 5 or 6, **characterized in that** the bypass (16) is connected to a second coolant fluid inlet of the compressor (11).

9. Thermal management device (1) according to one of the preceding claims, **characterized in that** it comprises, in the circuit (50) for supplying air to the car interior, an additional heating element (40) placed following the second heat exchanger (20b) in the direction (51) of circulation of air, in the supply circuit (50), towards the car interior.

10. Thermal management device (1) according to one of Claims 4 to 9, **characterized in that** it is configured such as to function in an air-conditioning configuration, in which:
- the first pressure reducer (14a) is closed,
- the second pressure reducer (14b) is open, and
- the three-way valve (22) redirects the heat transfer fluid towards the first heat exchanger (20a).

11. Thermal management device (1) according to one of Claims 4 to 10, **characterized in that** it is further configured such as to function in a heat pump configuration, in which:
- the first pressure reducer (14a) is open,
- the second pressure reducer (14b) is closed and
- the three-way valve (22) redirects the heat transfer fluid towards the second heat exchanger (20b).

12. Thermal management device (1) according to Claims 9 and 11 in combination, **characterized in that** it is further configured such that, in heat pump configuration, the additional heating element (40) is in operation.

13. Thermal management device (1) according to one of Claims 4 to 12, **characterized in that** it is further configured such as to function in a first demisting configuration, in which:
- the first pressure reducer (14a) is closed,
- the second pressure reducer (14b) is open, and
- the three-way valve (22) redirects the heat transfer fluid towards the second heat exchanger (20b).

14. Thermal management device (1) according to one of Claims 4 to 13, **characterized in that** it is further configured such as to function in a second demisting configuration, in which:
- the first pressure reducer (14a) is open,
- the second pressure reducer (14b) is open, and
- the three-way valve (22) redirects the heat transfer fluid towards the second heat exchanger (20b).

15. Thermal management device (1) according to Claims 9 and 14 in combination, **characterized in that** it is further configured such that, in the second demisting configuration, the additional heating element (40) is in operation.
